# EUROPEAN PATENT SPECIFICATION

(11) **EP 4 335 799 B1**
(45) Date of publication and mention of the grant of the patent: **30.09.2026**
(21) Application number: 22798866.4
(22) Date of filing: 07.04.2022
(51) Int. Cl.: B65G 54/02, G01N 35/04

(54) **SPECIMEN TRANSPORT DEVICE, SPECIMEN ANALYSIS SYSTEM, AND SPECIMEN PRETREATMENT SYSTEM**
PROBENTRANSPORTVORRICHTUNG, PROBENANALYSESYSTEM UND PROBENVORBEHANDLUNGSSYSTEM
DISPOSITIF DE TRANSPORT D'ÉCHANTILLON, SYSTÈME D'ANALYSE D'ÉCHANTILLON ET SYSTÈME DE PRÉTRAITEMENT D'ÉCHANTILLON

(30) Priority: 06.05.2021 JP 2021078581
(43) Date of publication of application: 13.03.2024
(73) Proprietor: HITACHI HIGH-TECH CORPORATION, Tokyo 105-6409 (JP)
(72) Inventor: SHIGA, Yuichiro, Tokyo 105-6409 (JP); ONIZAWA, Kuniaki, Tokyo 105-6409 (JP)
(74) Representative: MERH-IP Matias Erny Reichl Hoffmann Patentanwälte PartG mbB
(86) International application number: PCT/JP2022/017300
(87) International publication number: WO 2022/234759

(56) References cited:
- JP-A- 2010 110 146
- JP-A- 2017 527 815
- JP-A- 2018 136 313
- JP-A- 2020 106 354
- JP-A- H1 198 809

## Description

### Technical Field

The present invention relates to a sample conveying device that conveys a sample container containing a sample.

### Background Art

A sample analysis system that analyzes a biological sample (sample) such as blood or urine includes a sample conveying device that conveys a sample container containing a sample. In recent years, in order to improve analysis processing capabilities of the sample analysis system, high-speed conveyance, mass simultaneous conveyance, and conveyance in a plurality of directions of samples are desired. PTL 1 and PTL 2 disclose an example of techniques for implementing such conveyance.

PTL 1 discloses, as a subject of "providing a laboratory sample distribution system, which is fairly flexible and has high conveyance performance, and a corresponding method of operation", a technique of "a laboratory sample distribution system 100 including several container carriers 1, each of the container carriers 1 including at least one magnetically active device, preferably at least one permanent magnet and being adapted to convey a sample container 3, a conveyance plane 4 adapted to convey the container carriers 1, and several electro-magnetic actuators being stationarily arranged below the conveyance plane 4, the electro-magnetic actuator being adapted to move the container carriers 1 on the conveyance plane 4 by applying a magnetic force to the container carriers 1" (see abstract).

PTL 2 discloses, as a subject of "providing a highly reliable, compact, and lightweight conveying device", a technique "including: a conveyed object having at least one permanent magnet 10; a magnetic pole 25 having a core 22 made of a second magnetic material and a winding 21 wound around an outer circumference of the core 22; a driving circuit 50 supplying a current to the winding 21 of the magnetic pole 25; a current detection unit 30 configured to detect a current value of the current flowing through the winding 21; and an arithmetic unit 40 configured to estimate a position of the permanent magnet 10 based on the current value detected by the current detection unit 30 and control the current value of the current supplied from the driving circuit 50 to the winding 21 based on estimated position information of the permanent magnet 10" (see abstract).

### Citation List

### Patent Literature

PTL 1: JP2017-077971A
PTL 2: JP2020-106354A

### Summary of Invention

### Technical Problem

In the electro-magnetic actuator disclosed in PTL 1 and a conveying method using the magnetic pole having the winding disclosed in PTL 2, the sample holder is conveyed to a predetermined position by applying predetermined thrust to the sample holder. As a method for applying thrust to the sample holder, for example, a method is used in which a voltage is applied to a winding which becomes a magnetic pole to flow a current.

When a current flows through the winding, the winding itself generates heat due to Joule loss. Since a conductor resistance of the winding increases as the winding generates heat, even when a predetermined voltage required to cause a desired current to flow through the winding is applied, the current flowing through the winding becomes lower than a desired current value. When the current flowing through the winding decreases, there is a possibility that thrust for conveying the container carrier cannot be sufficiently obtained, the container carrier stops during conveyance or the container carrier cannot be conveyed to a target point, and there is a concern that functions and performance of a conveying device cannot be achieved.

The invention has been made in view of the above problems, and an object of the invention is to provide a sample conveying device capable of maintaining conveyance thrust for a sample container even when a conductor resistance is changed due to heat generated in a winding.

### Solution to Problem

A sample conveying device according to the invention calculates a decrease in a current from a set current value due to an increase in a conductor resistance of a winding when the current flows through the winding to change the current value of the current using the calculated decrease.

### Advantageous Effects of Invention

According to the sample conveying device in the invention, conveyance thrust for a sample container can be maintained even when a conductor resistance is changed due to heat generated in a winding. Problems, configurations, and effects other than those described above will be clarified by the following description of embodiments.

### Brief Description of Drawings

[FIG. 1] FIG. 1 is a configuration diagram of a sample conveying device 100 according to a first embodiment.
[FIG. 2] FIG. 2 is a partially enlarged view of the sample conveying device 100.
[FIG. 3] FIG. 3 illustrates a state when a magnetic material 103 moves to a position P' following FIG. 2.
[FIG. 4] FIG. 4 illustrates a current value-thrust waveform 401a illustrating a relationship between a current value and thrust when the magnetic material 103 is at a position P in FIG. 2.
[FIG. 5] FIG. 5 illustrates a current value-thrust waveform 401b illustrating a relationship between a current value and thrust when the magnetic material 103 is at the position P' in FIG. 3.
[FIG. 6] FIG. 6 illustrates an example of a change over time of a current value of a current flowing through a winding 106 and a temperature of a magnetic pole 107.
[FIG. 7] FIG. 7 is a flowchart illustrating processing of detecting the temperature of the magnetic pole 107 and processing of changing a current flowing through the magnetic pole 107.
[FIG. 8] FIG. 8 is a graph illustrating an increase in a temperature of the winding 106 due to a current supplied to the winding 106 for each initial temperature of the winding 106.
[FIG. 9] FIG. 9 is a diagram illustrating a method of estimating the initial temperature of the winding 106.
[FIG. 10] FIG. 10 is a plan view illustrating a configuration of a sample analysis system 1000 according to a fourth embodiment.

### Description of Embodiments

### <First Embodiment>

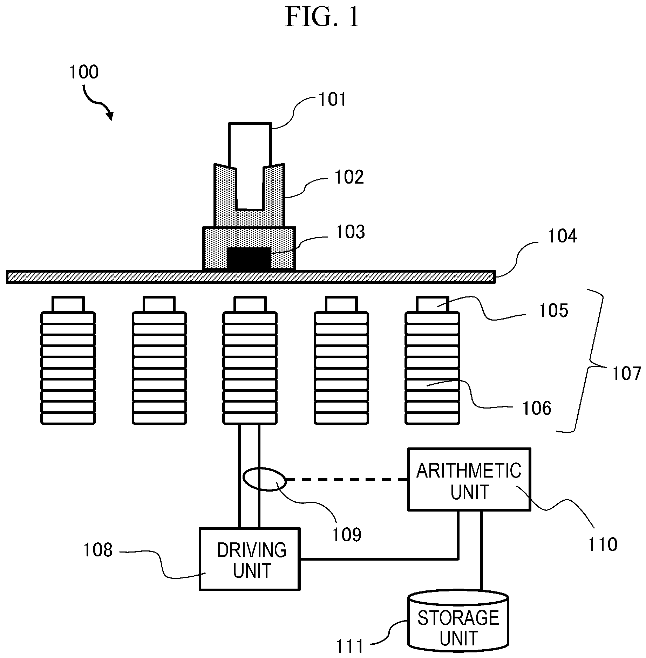

FIG. 1 is a configuration diagram of a sample conveying device 100 according to a first embodiment of the invention. A plurality of holders 102, in which sample containers 101 containing samples are provided, are provided in the sample conveying device 100. A magnetic material 103 is provided at a bottom surface portion of each holder 102. The magnetic material 103 is formed of, for example, a permanent magnet such as neodymium or ferrite. Alternatively, the magnetic material 103 can also be formed of other magnets and soft magnetic materials, and can be formed of appropriate combinations thereof. Although it is not necessary to provide the magnetic material 103 at a lower surface of the holder 102, it is desirable to provide the magnetic material 103 at the lower surface from a viewpoint of a range of a conveying force in a conveying method according to the invention.

The holder 102 slides on a conveying surface 104. In order to generate the conveying force, a plurality of magnetic poles 107 each including a columnar core 105 and a winding 106 wound around an outer circumference of the core 105 are provided at a lower portion of the conveying surface 104. The magnetic pole 107 is connected to a driving unit 108 that applies a predetermined voltage to the magnetic pole 107 to cause a predetermined current to flow through the winding 106. In the first embodiment, the driving unit 108 is similarly connected to other magnetic poles 107 (not shown for convenience of illustration).

The magnetic pole 107 to which the voltage is applied by the driving unit 108 acts as an electromagnet, and attracts the magnetic material 103 in the holder 102 on the conveying surface 104. After the holder 102 is attracted by the magnetic pole 107, voltage application to the magnetic pole 107 by the driving unit 108 is stopped, and a voltage is applied to a different magnetic pole 107 adjacent to the magnetic pole 107 by the driving unit 108 in the same manner as described above, so that the magnetic material 103 in the holder 102 is attracted to the adjacent magnetic pole 107. By repeating this procedure at all adjacent magnetic poles 107, the holder 102 moves on the conveying surface 104, that is, the sample in the sample container 101 that is held by the holder 102 provided with the magnetic material 103 is conveyed to a destination.

A current flowing through the winding 106 of the magnetic pole 107 during conveyance is detected by a current detection unit 109. The current detection unit 109 detects a current value of a current flowing when the current is supplied to the winding 106. The current flowing through the winding 106 detected by the current detection unit 109 is sent to an arithmetic unit 110 for numerical processing. In the first embodiment, when a plurality of different holders 102 are present, the current detection unit 109 desirably detects a current value when each of the plurality of holders 102 is stopped in the same region. However, the current may be detected during conveyance. During conveyance, it is desirable to detect the current value when different holders 102 are present in the same region. A known method using a Hall element and the like or various methods can be used as a method for specifying that the holders are in the same range.

The arithmetic unit 110 calculates a current flowing through each winding 106 using various types of information such as position information, speed information, and weight information of the holder 102, and outputs a command signal indicating a current value of the current to the driving unit 108. The driving unit 108 applies a voltage to the corresponding winding 106 according to the command signal. The arithmetic unit 110 further estimates a temperature of the magnetic pole 107 based on a current value of a current flowing through the winding 106 detected by the current detection unit 109. The arithmetic unit 110 may be implemented using hardware such as a circuit device in which a function is implemented, or may be implemented by an arithmetic device such as a processor executing software in which the function is implemented.

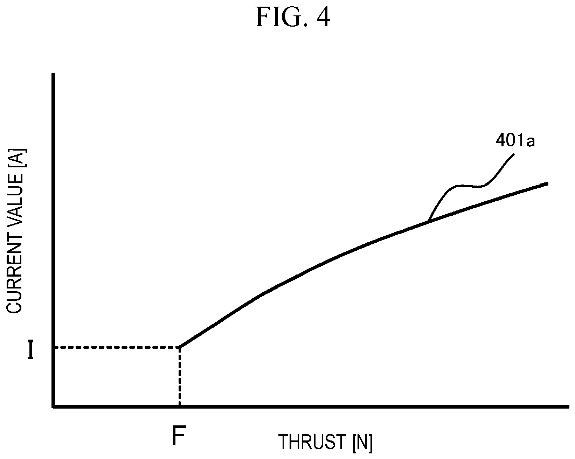

A storage unit 111 is implemented by a storage device that stores data used by the arithmetic unit 110. For example, data shown in FIGS. 4 to 6 to be described later can be stored. Details of data and a usage method thereof will be described later.

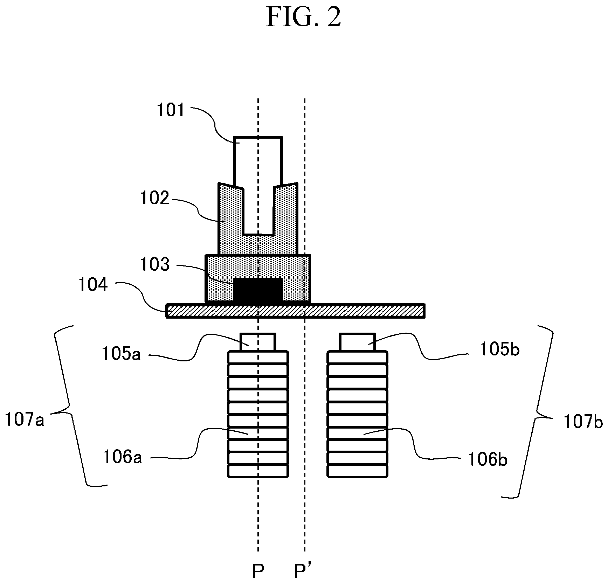

FIG. 2 is a partially enlarged view of the sample conveying device 100. In FIG. 2, the magnetic material 103 is at a position P. Even in a non-excited state in which no voltage is applied to a winding 106a, a force (hereinafter referred to as an attraction force) acts on the magnetic material 103 and a magnetic pole 107a in a mutually attracting direction. At this time, an attraction force also acts on the magnetic material 103 from a magnetic pole 107b, but is fairly weak compared with an attraction force from the magnetic pole 107a, and the attraction force acting on the magnetic material 103 from the magnetic pole 107a is dominant. Therefore, when a voltage is applied to a winding 106b, thrust toward the magnetic pole 107b is generated in the magnetic material 103, but the magnetic material 103 cannot move on the conveying surface 104 in a direction of the magnetic pole 107b unless a force exceeding the attraction force acting between the magnetic material 103 and the magnetic pole 107a is generated. In order to move the magnetic material 103 in the direction of the magnetic pole 107b on the conveying surface 104, it is necessary to apply a force exceeding the attraction force applied between the magnetic material 103 and the magnetic pole 107a as thrust to the magnetic pole 107b. Specifically, it is necessary to increase the current value of the current flowing through the winding 106b until the magnetic material 103 starts moving on the conveying surface 104 in the direction of the magnetic pole 107b.

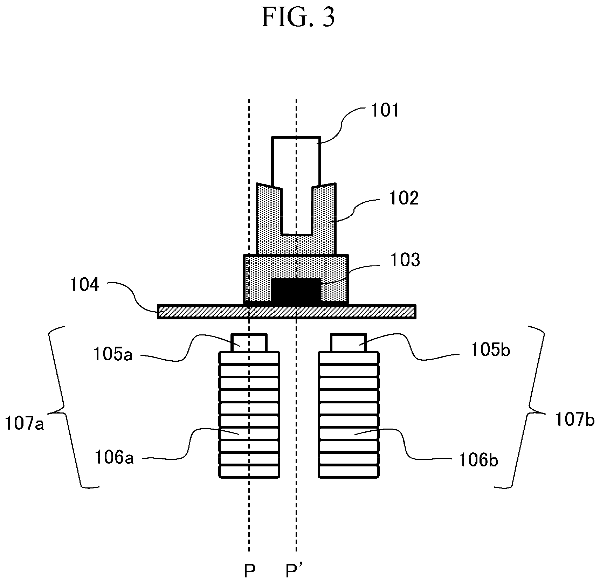

FIG. 3 illustrates a state when the magnetic material 103 moves to a position P' following FIG. 2. The position P' is between the magnetic pole 107a and the magnetic pole 107b. When the magnetic material 103 is at the position P', an attraction force acts on the magnetic material 103 from both the magnetic pole 107a and the magnetic pole 107b according to a distance between the magnetic pole 107a and the position P' and a distance between the magnetic pole 107b and the position P'. At this time, the attraction force from the magnetic pole 107a acting on the magnetic material 103 is weaker than the attraction force at the position P, and the attraction force from the magnetic pole 107b also acts on the magnetic material 103, so that the magnetic material 103 can be moved in the direction of the magnetic pole 107b on the conveying surface 104 even when a current value of a current flowing through the winding 106b is lower than that in FIG. 2.

FIG. 4 illustrates a current value-thrust waveform 401a illustrating a relationship between a current value and thrust when the magnetic material 103 is at the position P in FIG. 2. The current value is a current value of a current flowing through the winding 106b. The thrust is thrust for moving the magnetic material 103 in the direction of the magnetic pole 107b on the conveying surface 104.

In a non-excited state in which no voltage is applied to the winding 106b, an attraction force acts between the magnetic material 103 and the magnetic pole 107a, and in order to generate thrust F in which the holder 102 is attracted to the magnetic pole 107b and starts to move on the conveying surface 104 in the direction of the magnetic pole 107b, it is necessary to cause a current to flow to the magnetic pole 107b up to a current value I. By causing a current equal to or larger than the current value I to flow through the magnetic pole 107b, the holder 102 moves on the conveying surface 104 in the direction of the magnetic pole 107b. Thereafter, thrust applied to the holder 102 increases together with an increase in the current value in a substantially proportional relationship between the current value and the thrust. When a current equal to or less than the current value I flows through the magnetic pole 107b, thrust applied to the holder 102 cannot exceed the attraction force between the magnetic material 103 and the magnetic pole 107a, and the holder 102 cannot move on the conveying surface 104.

The current value I varies depending on a material of the magnetic pole 107, a distance between the magnetic material 103 and the magnetic pole 107, and the like. The thrust F has a value that varies depending on materials and shapes of the holder 102 and the magnetic pole 107, a material of the conveying surface 104, and the like.

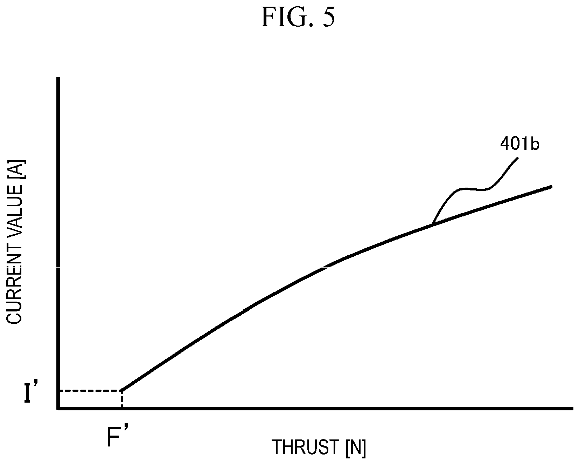

FIG. 5 illustrates a current value-thrust waveform 401b illustrating a relationship between a current value and thrust when the magnetic material 103 is at the position P' in FIG. 3. In the non-excited state, an attraction force acts on the magnetic material 103 from both the magnetic pole 107a and the magnetic pole 107b. At this time, since the attraction force from the magnetic pole 107a acting on the magnetic material 103 is smaller than that at the position P, the magnetic material 103 provided at the holder 102 can be moved in the direction of the magnetic pole 107b by generating thrust F' that is smaller than the thrust F illustrated in FIG. 4. That is, by applying a current value I', which is smaller than the current value I illustrated in FIG. 4, to the magnetic pole 107b, it is possible to generate the thrust F'.

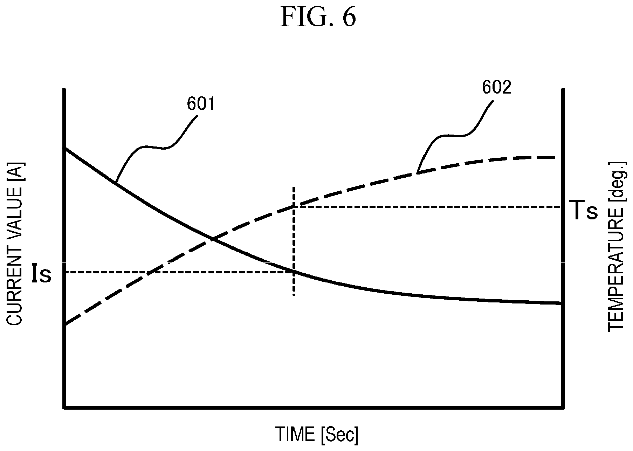

FIG. 6 illustrates an example of a change over time in a current value of a current flowing through the winding 106 and a temperature of the magnetic pole 107. A current value-time waveform 601 is a waveform indicating a change over time in a current value of a current flowing through the winding 106 when a specific voltage is applied to the winding 106. A temperature-time waveform 602 is a waveform indicating a change over time in the temperature of the magnetic pole 107 when a specific voltage is applied to the winding 106.

When a specific voltage is continuously applied to the winding 106, the winding 106 of the magnetic pole 107 generates heat due to Joule loss, the temperature of the magnetic pole 107 rises with time, and continues to rise to a certain degree of temperature depending on materials, resistance values, and the like of the winding 106 and the magnetic pole 107. Therefore, a waveform such as the temperature-time waveform 602 is obtained.

A conductor resistance of the winding 106 increases as the temperature increases. Accordingly, when a certain specific voltage is continuously applied to the winding 106, the current value of the current flowing through the winding 106 of the magnetic pole 107 decreases with time as the temperature of the magnetic pole 107 increases, and thus a waveform such as the current value-time waveform 601 is obtained.

In order to convey the sample in the sample container 101 to the destination, when the current value decreases as shown in FIG. 6, it is necessary to cause a current value exceeding the current value I or the current value I' to flow through the winding 106.

FIG. 6 also illustrates a relationship between the current value of the current flowing through the winding 106 and the temperature of the magnetic pole 107 when a specific voltage is applied to the winding 106. As an example, when the current value of the current flowing through the winding 106 is Is, it can be estimated that the temperature of the magnetic pole 107 at that time is Ts. For each specific voltage or current value of a current assumed to flow through the winding 106, by storing the relationship between the current value of the current flowing through the winding 106 and the temperature of the magnetic pole 107 as shown in FIG. 6 in the storage unit 111 shown in FIG. 1, the temperature of the magnetic pole 107 can be estimated based on the current value detected by the current detection unit 109.

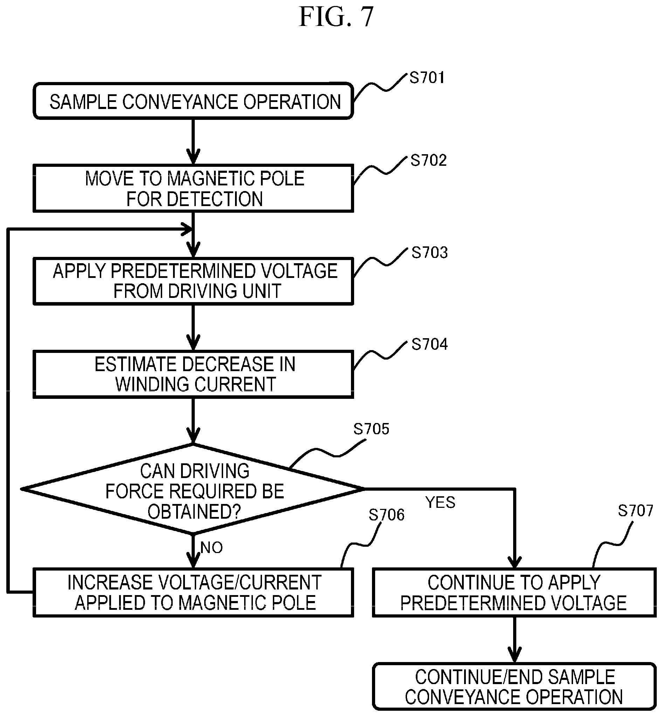

FIG. 7 is a flowchart illustrating processing of detecting the temperature of the magnetic pole 107 and processing of changing a current flowing through the magnetic pole 107. This flowchart is performed by the arithmetic unit 110. Hereinafter, each step in FIG. 7 will be described.

### (FIG. 7: Steps S701 and S702)

When conveyance of the holder 102 holding the sample container 101 is started, this flowchart is started (S701). During a sample conveyance operation, the holder 102 is conveyed to an upper portion of the magnetic pole 107 where the current detection unit 109 detects a current flowing through the winding 106 (S702).

### (FIG. 7: Step S703)

The driving unit 108 applies a predetermined voltage to the magnetic pole 107. The predetermined voltage referred to here is a voltage for supplying a current for generating thrust required for moving the holder 102 on the conveying surface 104, and does not consider an increase in a conductor resistance of the winding 106.

### (FIG. 7: Step S704)

The arithmetic unit 110 estimates a decrease in the current flowing through the winding 106 over time. Any of the following methods can be used as an estimation method.

### (FIG. 7: Step S704: Estimation method 1)

The current detection unit 109 continuously detects the current flowing through the winding 106 after the driving unit 108 starts to supply a current to the winding 106. The arithmetic unit 110 acquires a decrease in the winding current based on a difference between a set current value supplied to the winding 106 in S703 and a current value detected by the current detection unit 109 at a time of this step. In this case, a detection value can be used, and the decrease can be accurately obtained.

### (FIG. 7: Step S704: Estimation method 2)

Data (reference sign 601 in FIG. 6) describing a relationship between a time for supplying a current to the winding 106 and a change over time in a current value of the winding 106 is stored in the storage unit 111 in advance. Similar data may be stored for each set current value supplied to the winding 106, and data corresponding to the set current value may be used. The arithmetic unit 110 estimates a decrease in the current flowing through the winding 106 over time by referring to the data using an elapsed time from S703 to this step.

### (FIG. 7: Step S704: Estimation method 3)

Data (reference sign 602 in FIG. 6) describing a relationship between a time for supplying a current to the winding 106 and an increase in a temperature of the winding 106 is stored in the storage unit 111 in advance. An initial temperature of the winding 106 may be assumed to be, for example, a standard room temperature (e.g., 20°C). Similar data may be provided for each initial temperature of the winding 106, and corresponding data may be specified by measuring the temperature of the winding 106 with a thermometer or the like. The arithmetic unit 110 estimates an increase in the temperature from the initial temperature of the winding 106 by referring to the data using the elapsed time from S703 to this step. Further, data (reference sign 601 in FIG. 6) describing a relationship between the increase in the temperature from the initial temperature of the winding 106 and a change over time in a current value of the winding 106 is stored in the storage unit 111 in advance. The arithmetic unit 110 estimates a decrease in the current flowing through the winding 106 over time by referring to the data using the estimated winding temperature.

### (FIG. 7: Step S705)

The storage unit 111 stores data (data illustrated in FIGS. 4 and 5) describing a relationship between the current value of the current flowing through the winding 106 and the thrust obtained based on the current value. This data further describes thrust required for performing a predetermined movement operation of the holder 102. For example, the required thrust is described for each content of the movement operation (movement direction, movement speed, acceleration, and the like). The arithmetic unit 110 acquires the thrust obtained based on a present winding current value by referring to this data using a value obtained by subtracting the decrease in the winding current estimated in S704 from the set current value. The arithmetic unit 110 also determines whether the thrust obtained based on the present winding current value reaches thrust required for performing a desired movement operation. When the required thrust can be obtained, the processing proceeds to S707, and when the required thrust cannot be obtained, the processing proceeds to S706.

### (FIG. 7: Step S706)

The arithmetic unit 110 instructs the driving unit 108 to raise the voltage applied to the winding 106 or the current value of the current flowing through the winding 106 by one step. Specifically, an instruction is given to increase the predetermined voltage applied to the winding 106 by 5 V, or to increase the current value of the current flowing through the winding 106 by 10 mA, for example. After this step, the processing returns to S703 and the similar processing is repeated.

### (FIG. 7: Step S707)

The arithmetic unit 110 instructs the driving unit 108 to continuously apply the voltage applied in S703 until the holder 102 moves to a vicinity of the next magnetic pole 107.

### <Second Embodiment>

In the first embodiment, a method of obtaining a desired thrust when the current flowing through the winding 106 decreases over time as the temperature of the winding 106 increases has been described. In a second embodiment of the invention, a method for estimating the temperature itself of the winding 106 will be described. Estimation of the temperature of the winding 106 has a significance of indirectly detecting a decrease in thrust. In order to secure the thrust according to the first embodiment, the winding current may be continuously increased, so a winding temperature also continues to rise. Therefore, it is significant to monitor this in order to avoid an extreme temperature rise.

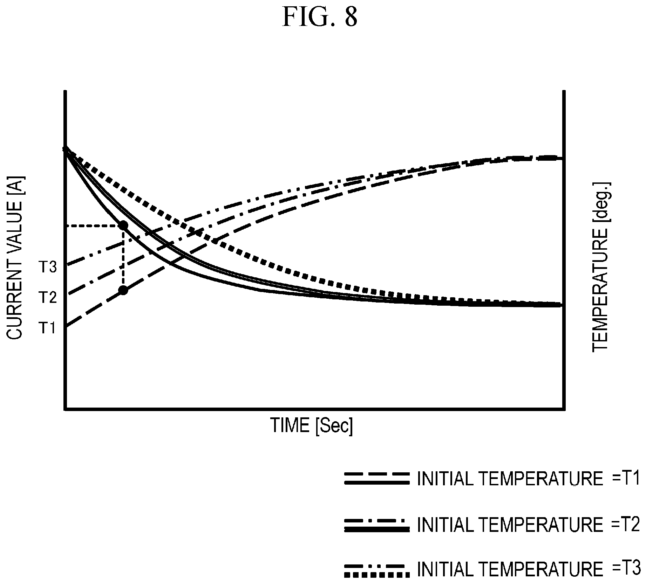

FIG. 8 is a graph illustrating an increase in the temperature of the winding 106 due to a current supplied to the winding 106 for each initial temperature of the winding 106. The winding current and the winding temperature converge to certain values according to the elapsed time. It is considered that a rate of increase of the winding temperature over time varies depending on the initial temperature of the winding 106, and even if an initial current value of an initial current supplied to the winding 106 is the same, a rate of decrease of the current value over time also varies according to the initial temperature. Therefore, similar data as in FIG. 6 is stored in the storage unit 111 in advance for each initial temperature of the winding 106, and an estimated value of the winding temperature corresponding to the elapsed time can be obtained by referring to data corresponding to the initial temperature of the winding 106.

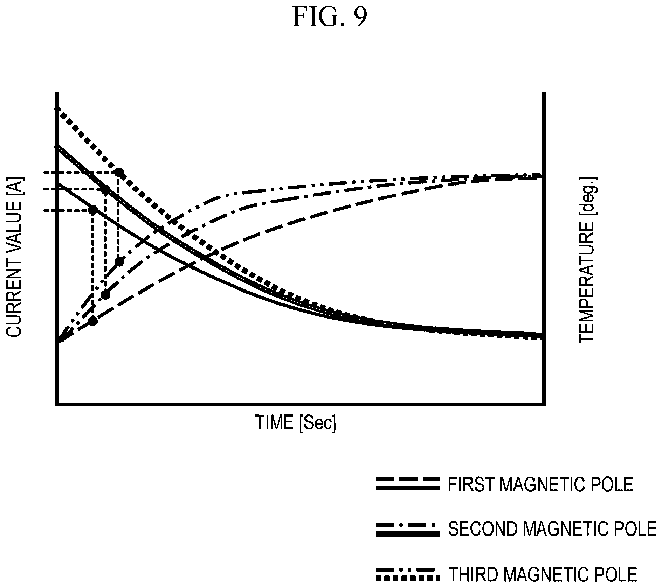

FIG. 9 is a diagram illustrating a method of estimating the initial temperature of the winding 106. In order to estimate the temperature of the winding 106 using the data illustrated in FIG. 8, it is necessary to measure the initial temperature of the winding 106. This is because it is necessary to refer to a curve corresponding to the initial temperature. If a temperature measuring element is used to measure the temperature of the winding 106, cost of the device increases. Therefore, instead of using the temperature measuring element, the initial temperature of the winding 106 is estimated by measuring the current value of each of the plurality of windings 106.

The winding current and the winding temperature converge to certain values according to the elapsed time. Even when the initial temperature of the winding 106 is the same, the rate of increase of the winding temperature over time is different according to the initial current value of the initial current supplied to the winding 106. Therefore, data similar to that in FIG. 6 is stored in advance in the storage unit 111 for each initial current value of the winding 106, and different initial current values are supplied to the plurality of windings 106. An estimated value of the winding temperature corresponding to the elapsed time can be obtained by referring to data corresponding to the initial current value of the winding 106. If data corresponding to each winding converges to the same initial temperature at a time 0, it can be estimated that the initial temperature is the initial temperature of the winding 106.

If at least two or more pieces of the data corresponding to each winding converge to different initial temperatures, similar processing may be repeated by, for example, re-measuring the current value. If it is confirmed that data corresponding to each winding has converged to the same initial temperature at the time 0, the initial temperature is determined to be the initial temperature of the winding 106.

In a method for estimating the initial temperature of the winding 106 using FIG. 9, when the initial temperature estimated using the data corresponding to each winding is only slightly different (difference between two is less than threshold value), an intermediate temperature may be approximately adopted as the initial temperature of the winding 106.

In the case of estimating the temperature of the winding 106 using FIG. 8, corresponding data can be specified using a time for supplying a current to the winding 106 and a current value instead of providing the temperature measuring element. In this case, instead of using the temperature measuring element, it is sufficient to count a time during which the current is supplied, which is advantageous from a viewpoint of device cost. In a case where the initial temperature of the winding 106 is estimated using FIG. 9, when similar data as in FIG. 9 is provided for each initial temperature, similarly, corresponding data may be specified using the time for supplying the current to the winding 106.

The initial temperature of the winding 106 is considered to be substantially equal to a room temperature of environment in which the sample conveying device 100 is provided. Therefore, for example, the room temperature can be estimated by estimating the initial temperature of the winding 106 by the above-described method in a start sequence when the sample conveying device 100 is activated.

### <Third Embodiment>

In the above embodiment, it has been described that the decrease in the current flowing through the winding 106 is estimated when the holder 102 holding the sample container 101 containing the sample is conveyed, but it is not always necessary to use the holder 102 holding the sample container 101 to estimate the decrease in the current. It is also possible to estimate a similar decrease using the current flowing through the winding 106 when the holder 102 is not conveyed.

For example, a decrease in the winding current can be estimated by applying a test voltage (or passing a test current) to the winding 106 of the magnetic pole 107 from the driving unit 108 using the magnetic pole 107 that is not temporarily used before a conveyance operation of the holder 102 or during conveyance of the holder 102.

### <Fourth Embodiment>

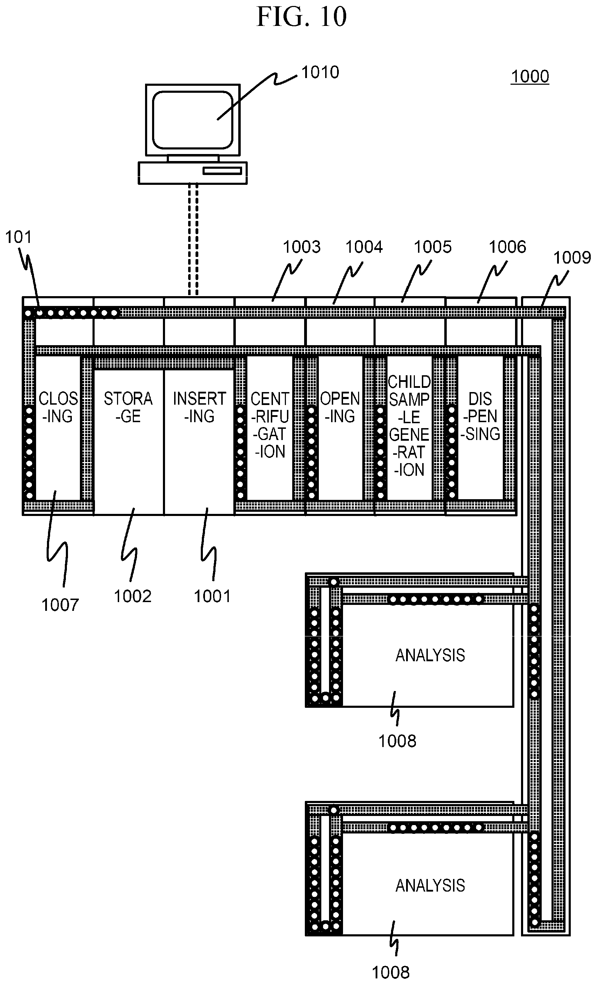

FIG. 10 is a plan view illustrating a configuration of a sample analysis system 1000 according to a fourth embodiment of the invention. In FIG. 10, the sample analysis system 1000 is a system that automatically analyzes components of a sample such as blood and urine. Main components of the sample analysis system 1000 are a sample inserting unit 1001, a sample storage unit 1002, a centrifugal processing unit 1003, an opening processing unit 1004, a child sample container generation processing unit 1005, a dispensing processing unit 1006, a closing processing unit 1007, an analysis processing unit 1008, a sample conveying unit 1009, and a control unit 1010.

The sample inserting unit 1001 is a unit that inserts the sample container 101 containing a sample into the sample analysis system 1000. A sample recognition unit, a plug detection unit, and a sample holder recognition unit (all of which are omitted for convenience of illustration) are provided in the sample inserting unit 1001, and a type of the sample container 101 to be conveyed, a shape of a plug of the container, and ID information given to the holder 102 in which the sample container 101 is provided are recognized to obtain information for specifying the sample container 101 to be conveyed. The sample holder recognition unit is provided at each place in the sample analysis system 1000, and a location of the sample container 101 can be checked by the sample holder recognition unit at each place. The centrifugal processing unit 1003 is a unit that performs centrifugal separation on the inserted sample container 101.

The opening processing unit 1004 is a unit that opens a plug from the inserted sample container 101.

The child sample container generation processing unit 1005 is a unit that prepares another sample container 101 required for dispensing the sample in the inserted sample container 101 by the next dispensing processing unit 1006, and that attaches a barcode or the like.

The dispensing processing unit 1006 is a unit that subdivides the sample into another sample container 101 prepared by the child sample container generation processing unit 1005 in order to analyze a sample that is not centrifuged or centrifuged sample in the centrifugal processing unit 1003 by the analysis processing unit 1008 or the like.

The closing processing unit 1007 is a unit that closes a plug in the sample container 101 in which the plug is opened or a plug in the subdivided sample container 101. The sample analysis system 1000 including two or more closing processing units 1007 may be implemented according to a type of the plug used for closing the sample container 101.

The analysis processing unit 1008 is a unit that transfers a sample processed by each processing unit in the sample analysis system 1000 and that performs qualitative and quantitative analysis for components of the sample. Analysis items in this unit are not particularly limited, and a configuration of a known automatic analyzer for analyzing biochemical items and immune items can be adopted. When a plurality of analysis processing units 1008 are provided, the analysis processing units 1008 may have the same specification or different specifications, and are not particularly limited.

The sample storage unit 1002 is a unit that accommodates the sample container 101 closed by the closing processing unit 1007.

The sample conveying unit 1009 is a mechanism that transfers the sample container 101 inserted from the sample inserting unit 1001 or the subdivided sample container 101 dispensed in the dispensing processing unit 1006 to each unit in the sample analysis system 1000 such as the centrifugal processing unit 1003, the dispensing processing unit 1006, and the analysis processing unit 1008. The sample conveying unit 1009 is also used to convey the sample container 101 to each mechanism unit that performs a predetermined operation in each unit such as the centrifugal processing unit 1003, the dispensing processing unit 1006, and the analysis processing unit 1008. Accordingly, the holder 102 on which the sample container 101 inserted from the sample inserting unit 1001 is provided is conveyed to a predetermined pretreatment unit via the sample conveying unit 1009, and then conveyed to the analysis processing unit 1008. The sample conveying unit 1009 can be implemented by combining a plurality of sample conveying devices 100 described in the first embodiment.

The control unit 1010 is a functional unit that controls an operation of each unit in the sample analysis system 1000 and each mechanism in each unit and that analyzes measurement data acquired by the analysis processing unit 1008. The control unit 1010 is implemented by a computer including a display device such as a liquid crystal display, an input device, a storage device, a CPU, a memory and the like. The control unit 1010 can check a location of the sample in the sample analysis system 1000 based on the ID information of the holder 102 by communication with each unit and each mechanism described above. The control unit 1010 controls an operation of each device based on various programs recorded in a storage device in the control unit 1010. Control processing of an operation executed by the control unit 1010 may be integrated into one program, may be divided into a plurality of programs, or may be a combination thereof. A part or all of the programs may be implemented by dedicated hardware or may be modularized.

The sample conveying device 100 according to the fourth embodiment may be implemented by the sample conveying device 100 described in the first embodiment alone, or may be implemented by combining the sample conveying device 100 not including the arithmetic unit 110 and the sample conveying device 100 described in the first embodiment. The sample conveying unit 1009 may include at least one sample conveying device 100.

In the fourth embodiment, a case has been described where the sample analysis system 1000 includes various pretreatment units such as the sample inserting unit 1001 for sample pretreatment. Alternatively, a system (a system in which a plurality of analysis processing units 1008 are connected by the sample conveying device 100) that does not include each unit for pretreatment can be used. The present embodiment can also be applied to a configuration in which the units are connected by the sample conveying device 100 in a sample pretreatment system. In the sample pretreatment system, the analysis processing unit 1008 is omitted from the sample analysis system 1000.

### <Modification of Invention>

The invention is not limited to the embodiments described above, and includes various modifications. The embodiments described above have been described in detail for easy understanding of the invention, and the invention is not necessarily limited to those including all the configurations described above. A part of a configuration of an embodiment may be replaced with a configuration of another embodiment, and a configuration of an embodiment may also be added with a configuration of another embodiment. A part of a configuration of each embodiment may be added, deleted, or replaced with another configuration.

Examples of a sample conveyed by the sample conveying device 100 according to the invention include biological samples such as blood, plasma, serum, urine, and other body fluids, but the invention is not limited thereto, and the invention can be similarly applied to a mechanism that conveys the sample container 101 by thrust using a magnetic force.

### Reference Signs List

100: sample conveying device,
101: sample container,
102: holder (conveying container),
103: magnetic material (first magnetic material),
104: conveying surface,
105, 105a, 105b: core (second magnetic material),
106, 106a, 106b: winding,
107, 107a, 107b: magnetic pole (magnetic circuit),
108: driving unit,
109: current detection unit,
110: arithmetic unit,
1000: sample analysis system,
1001: sample inserting unit,
1002: sample storage unit,
1003: centrifugal processing unit,
1004: opening processing unit,
1005: child sample container generation processing unit,
1006: dispensing processing unit,
1007: closing processing unit,
1008: analysis processing unit,
1009: sample conveying unit,
1010: control unit

## Claims

1. A sample conveying device (100) that conveys a sample container (101) containing a sample, the device (100) comprising:
a magnetic material (103) that is disposed in a conveyance path on which the sample container (101) is conveyed;
a magnetic circuit (107, 107a, 107b) that includes windings (106, 106a, 106b) wound around an outer circumference of the magnetic material (103);
a driving unit (108) that supplies a current to the winding (106, 106a, 106b);
a current detection unit (109) that detects a current value of a current flowing through the magnetic circuit (107, 107a, 107b); and
an arithmetic unit (110) that controls the driving unit (108), wherein
when the current flows through the winding (106, 106a, 106b), the magnetic circuit (107, 107a, 107b) generates a magnetic force acting on the sample container (101) to move the sample container (101) on the conveyance path,
the arithmetic unit (110) controls the driving unit (108) so as to supply the current having a set current value set in advance to cause the sample container (101) to perform a predetermined movement operation on the conveyance path to the winding (106, 106a, 106b), wherein the sample conveying device (100) is **characterized in that**:
the arithmetic unit (110) calculates a decrease in the current from the set current value due to an increase in a conductor resistance of the winding (106, 106a, 106b) when the current flows through the winding (106, 106a, 106b), and
the arithmetic unit (110) causes the sample container (101) to perform the movement operation on the conveyance path by changing the current value of the current according to the calculated decrease.

2. The sample conveying device (100) according to claim 1, further comprising:
a storage unit (111) that stores current value data describing a relationship between a change over time in the current value of the current flowing through the winding (106, 106a, 106b) and a time for passing the current through the winding (106, 106a, 106b), wherein
the arithmetic unit (110) calculates the decrease by referring to the current value data by using the time for passing the current through the winding (106, 106a, 106b).

3. The sample conveying device (100) according to claim 1, further comprising:
a storage unit (111) that stores temperature vs. current value data describing a relationship among a time for passing the current through the winding (106, 106a, 106b), an increase in a temperature of the winding (106, 106a, 106b) due to the current flowing through the winding (106, 106a, 106b), and a fluctuation in the current value of the current due to the increase in the temperature of the winding (106, 106a, 106b), wherein
the arithmetic unit (110) acquires the increase in the temperature of the winding (106, 106a, 106b) by referring to the temperature vs. current value data by using the time for passing the current through the winding (106, 106a, 106b), and
the arithmetic unit (110) calculates the decrease by referring to the temperature vs. current value data by using the acquired increase in the temperature of the winding (106, 106a, 106b).

4. The sample conveying device (100) according to claim 1, further comprising:
a storage unit (111) that stores magnetic force data describing a relationship between a magnetic force generated by the current flowing through the winding (106, 106a, 106b) and the current value of the current, wherein
the arithmetic unit (110) calculates a reduced magnetic force acting on the sample container (101) under a reduced current value by referring to the magnetic force data by using the reduced current value reduced by the decrease from the set current value, and
when the sample container (101) cannot be moved by a set distance due to the reduced magnetic force, the arithmetic unit (110) changes the current value of the current by using the decrease.

5. The sample conveying device (100) according to claim 1, further comprising:
a storage unit (111) that stores temperature data describing a relationship between an increase in a temperature of the winding (106, 106a, 106b) due to the current flowing through the winding (106, 106a, 106b) and the time for passing the current through the winding (106, 106a, 106b), wherein
the arithmetic unit (110) calculates the increase in the temperature of the winding (106, 106a, 106b) by referring to the temperature data by using the time for passing the current through the winding (106, 106a, 106b).

6. The sample conveying device (100) according to claim 1, further comprising:
a storage unit (111) that stores temperature vs. current value data describing the relationship among a time for passing the current through the winding (106, 106a, 106b), an increase in a temperature of the winding (106, 106a, 106b) due to the current flowing through the winding (106, 106a, 106b), and a fluctuation in the current value of the current due to the increase in the temperature of the winding (106, 106a, 106b), wherein
the arithmetic unit (110) acquires the fluctuation in the current value of the current by referring to the temperature vs. current value data by using the time for passing the current through the winding (106, 106a, 106b), and
the arithmetic unit (110) calculates the increase in the temperature of the winding (106, 106a, 106b) by referring to the temperature vs. current value data using the acquired fluctuation of the current value.

7. The sample conveying device (100) according to claim 1, further comprising:
a storage unit (111) that stores temperature vs. current value data describing the relationship among a time for passing the current through the winding (106, 106a, 106b), an increase in a temperature from an initial temperature of the winding (106, 106a, 106b) due to the current flowing through the winding (106, 106a, 106b), and a fluctuation in the current value of the current due to the increase in the temperature of the winding (106, 106a, 106b), wherein
the storage unit (111) stores the temperature vs. current value data for each initial temperature of the winding (106, 106a, 106b), and
the arithmetic unit (110) calculates the initial temperature of the winding (106, 106a, 106b) by referring to the temperature vs. current value data by using the time for passing the current through the winding (106, 106a, 106b) or the current value detected by the current detection unit (109).

8. The sample conveying device (100) according to claim 7, further comprising:
as the winding (106, 106a, 106b), a first winding wound around an outer circumference of a first magnetic pole and a second winding wound around an outer circumference of a second magnetic pole, wherein
the storage unit (111) stores the temperature vs. current value data for each initial value of the current value,
the driving unit (108) passes the current having a first initial current value through the first winding and passes the current having a second initial current value through the second winding,
the arithmetic unit (110) acquires a first initial temperature of the winding (106, 106a, 106b) by referring to the temperature vs. current value data by using the first initial current value,
the arithmetic unit (110) acquires a second initial temperature of the winding (106, 106a, 106b) by referring to the temperature vs. current value data by using the second initial current value, and
when a difference between the first initial temperature and the second initial temperature is less than a threshold value, the arithmetic unit (110) specifies the first initial temperature, the second initial temperature, or an intermediate temperature between the first initial temperature and the second initial temperature as the initial temperature of the winding (106, 106a, 106b).

9. The sample conveying device (100) according to claim 7, wherein the arithmetic unit (110) estimates a temperature of an environment in which the sample conveying device (100) is installed by calculating the initial temperature of the winding (106, 106a, 106b) in a start sequence when the sample conveying device (100) is activated.

10. The sample conveying device (100) according to claim 1, further comprising:
as the magnetic circuit (107, 107a, 107b), a first winding wound around an outer circumference of a first magnetic pole and a second winding wound around an outer circumference of a second magnetic pole, wherein
the driving unit (108) passes a test current for detecting the decrease in the second winding through the second winding at a time when the current is flowing through the first winding and the current is not flowing through the second winding, and
the arithmetic unit (110) estimates the decrease in the first winding by using the decrease in the second winding.

11. A sample analysis system (1000) including the sample conveying device (100) according to claim 1.

12. A sample pretreatment system including the sample conveying device (100) according to claim 1.

## Patentansprüche

1. Probenfördervorrichtung (100), die einen Probenbehälter (101), der eine Probe enthält, befördert, wobei die Vorrichtung (100) umfasst:
ein magnetisches Material (103), das in einem Förderweg angeordnet ist, auf dem der Probenbehälter (101) befördert wird;
eine magnetische Schaltung (107, 107a, 107b), die Wicklungen (106, 106a, 106b) enthält, die um einen äußeren Umfang des magnetischen Materials (103) gewickelt sind;
eine Ansteuereinheit (108), die einen Strom an die Wicklungen (106, 106a, 106b) liefert;
eine Stromdetektionseinheit (109), die einen Stromwert eines Stroms, der durch die magnetische Schaltung (107, 107a, 107b) fließt, detektiert; und
eine Arithmetikeinheit (110), die die Ansteuereinheit (108) steuert, wobei
dann, wenn der Strom durch die Wicklung (106, 106a, 106b) fließt, die magnetische Schaltung (107, 107a, 107b) eine magnetische Kraft erzeugt, die auf den Probenbehälter (101) wirkt, um den Probenbehälter (101) auf dem Förderweg zu bewegen,
die Arithmetikeinheit (110) die Ansteuereinheit (108) steuert, um den Strom, dessen eingestellter Stromwert im Voraus eingestellt wird, um den Probenbehälter (101) zu veranlassen, einen vorgegebenen Bewegungsvorgang auf dem Förderweg auszuführen, für die Wicklung (106, 106a, 106b) bereitzustellen, wobei die Probenfördervorrichtung (100) **dadurch gekennzeichnet ist, dass**:
die Arithmetikeinheit (110) eine Abnahme des Stroms von dem eingestellten Stromwert aufgrund einer Zunahme des Leiterwiderstands der Wicklung (106, 106a, 106b), wenn der Strom durch die Wicklung (106, 106a, 106b) fließt, berechnet, und
die Arithmetikeinheit (110) den Probenbehälter (101) veranlasst, den Bewegungsvorgang auf dem Förderweg durch Ändern des Stromwerts des Stroms gemäß der berechneten Abnahme auszuführen.

2. Probenfördervorrichtung (100) nach Anspruch 1, die ferner umfasst:
eine Speichereinheit (111), die Stromwertdaten speichert, die eine Beziehung zwischen einer Änderung über die Zeit des Stromwerts des Stroms, der durch die Wicklung (106, 106a, 106b) fließt, und einer Zeit zum Leiten des Stroms durch die Wicklung (106, 106a, 106b) beschreiben, wobei
die Arithmetikeinheit (110) die Abnahme durch Bezugnahme auf die Stromwertdaten unter Verwendung der Zeit zum Leiten des Stroms durch die Wicklung (106, 106a, 106b) berechnet.

3. Probenfördervorrichtung (100) nach Anspruch 1, die ferner umfasst:
eine Speichereinheit (111), die Temperatur-gegen-Stromwert-Daten speichert, die eine Beziehung zwischen einer Zeit zum Leiten des Stroms durch die Wicklung (106, 106a, 106b), einer Zunahme der Temperatur der Wicklung (106, 106a, 106b) aufgrund des Stroms, der durch die Wicklung (106, 106a, 106b) fließt, und einer Schwankung des Stromwerts des Stroms aufgrund der Zunahme der Temperatur der Wicklung (106, 106a, 106b) beschreiben, wobei
die Arithmetikeinheit (110) die Zunahme der Temperatur der Wicklung (106, 106a, 106b) durch Bezugnahme auf die Temperatur-gegen-Stromwert-Daten unter Verwendung der Zeit zum Leiten des Stroms durch die Wicklung (106, 106a, 106b) erfasst, und
die Arithmetikeinheit (110) die Abnahme durch Bezugnahme auf die Temperatur-gegen-Stromwert-Daten unter Verwendung der erfassten Zunahme der Temperatur der Wicklung (106, 106a, 106b) berechnet.

4. Probenfördervorrichtung (100) nach Anspruch 1, die ferner umfasst:
eine Speichereinheit (111), die Daten einer magnetischen Kraft speichert, die eine Beziehung zwischen einer magnetischen Kraft, die durch den Strom, der durch die Wicklung (106, 106a, 106b) fließt, erzeugt wird, und dem Stromwert des Stroms beschreiben, wobei
die Arithmetikeinheit (110) eine verringerte magnetische Kraft, die auf den Probenbehälter (101) bei einem verringerten Stromwert wirkt, durch Bezugnahme auf die Daten der magnetischen Kraft unter Verwendung des verringerten Stromwerts, der durch die Abnahme von dem eingestellten Stromwert verringert wird, berechnet, und
dann, wenn der Probenbehälter (101) aufgrund der verringerten magnetischen Kraft nicht um eine eingestellte Strecke bewegt werden kann, die Arithmetikeinheit (110) den Stromwert des Stroms unter Verwendung der Abnahme ändert.

5. Probenfördervorrichtung (100) nach Anspruch 1, die ferner umfasst:
eine Speichereinheit (111), die Temperaturdaten speichert, die eine Beziehung zwischen einer Zunahme der Temperatur der Wicklung (106, 106a, 106b) aufgrund des Stroms, der durch die Wicklung (106, 106a, 106b) fließt, und der Zeit zum Leiten des Stroms durch die Wicklung (106, 106a, 106b) beschreiben, wobei
die Arithmetikeinheit (110) die Zunahme der Temperatur der Wicklung (106, 106a, 106b) durch Bezugnahme auf die Temperaturdaten unter Verwendung der Zeit zum Leiten des Stroms durch die Wicklung (106, 106a, 106b) berechnet.

6. Probenfördervorrichtung (100) nach Anspruch 1, die ferner umfasst:
eine Speichereinheit (111), die Temperatur-gegen-Stromwert-Daten speichert, die die Beziehung zwischen einer Zeit zum Leiten des Stroms durch die Wicklung (106, 106a, 106b), einer Zunahme der Temperatur der Wicklung (106, 106a, 106b) aufgrund des Stroms, der durch die Wicklung (106, 106a, 106b) fließt, und einer Schwankung des Stromwerts des Stroms aufgrund der Zunahme der Temperatur der Wicklung (106, 106a, 106b) beschreiben, wobei
die Arithmetikeinheit (110) die Schwankung des Stromwerts des Stroms durch Bezugnahme auf die Temperatur-gegen-Stromwert-Daten unter Verwendung der Zeit zum Leiten des Stroms durch die Wicklung (106, 106a, 106b) erfasst und
die Arithmetikeinheit (110) die Zunahme der Temperatur der Wicklung (106, 106a, 106b) durch Bezugnahme auf die Temperatur-gegen-Stromwert-Daten unter Verwendung der erfassten Schwankung des Stromwerts berechnet.

7. Probenfördervorrichtung (100) nach Anspruch 1, die ferner umfasst:
eine Speichereinheit (111), die Temperatur-gegen-Stromwert-Daten speichert, die die Beziehung zwischen einer Zeit zum Leiten des Stroms durch die Wicklung (106, 106a, 106b), einer Zunahme der Temperatur von einer Anfangstemperatur der Wicklung (106, 106a, 106b) aufgrund des Stroms, der durch die Wicklung (106, 106a, 106b) fließt, und einer Schwankung des Stromwerts des Stroms aufgrund der Zunahme der Temperatur der Wicklung (106, 106a, 106b) beschreiben, wobei
die Speichereinheit (111) die Temperatur-gegen-Stromwert-Daten für jede Anfangstemperatur der Wicklung (106, 106a, 106b) speichert und
die Arithmetikeinheit (110) die Anfangstemperatur der Wicklung (106, 106a, 106b) durch Bezugnahme auf die Temperatur-gegen-Stromwert-Daten unter Verwendung der Zeit zum Leiten des Stroms durch die Wicklung (106, 106a, 106b) oder des durch die Stromdetektionseinheit (109) detektierten Stromwerts berechnet.

8. Probenfördervorrichtung (100) nach Anspruch 7, die ferner umfasst:
als die Wicklung (106, 106a, 106b) eine erste Wicklung, die um einen äußeren Umfang eines ersten Magnetpols gewickelt ist, und eine zweite Wicklung, die um einen äußeren Umfang eines zweiten Magnetpols gewickelt ist, wobei
die Speichereinheit (111) die Temperatur-gegen-Stromwert-Daten für jeden Anfangswert des Stromwerts speichert,
die Ansteuereinheit (108) den Strom mit einem ersten Anfangsstromwert durch die erste Wicklung leitet und den Strom mit einem zweiten Anfangsstromwert durch die zweite Wicklung leitet,
die Arithmetikeinheit (110) eine erste Anfangstemperatur der Wicklung (106, 106a, 106b) durch Bezugnahme auf die Temperatur-gegen-Stromwert-Daten unter Verwendung des ersten Anfangsstromwerts erfasst,
die Arithmetikeinheit (110) eine zweite Anfangstemperatur der Wicklung (106, 106a, 106b) durch Bezugnahme auf die Temperatur-gegen-Stromwert-Daten unter Verwendung des zweiten Anfangsstromwerts erfasst und
dann, wenn ein Unterschied zwischen der ersten Anfangstemperatur und der zweiten Anfangstemperatur kleiner als ein Schwellenwert ist, die Arithmetikeinheit (110) die erste Anfangstemperatur, die zweite Anfangstemperatur oder eine Zwischentemperatur zwischen der ersten Anfangstemperatur und der zweiten Anfangstemperatur als die Anfangstemperatur der Wicklung (106, 106a, 106b) spezifiziert.

9. Probenfördervorrichtung (100) nach Anspruch 7, wobei die Arithmetikeinheit (110) eine Temperatur einer Umgebung, in die die Probenfördervorrichtung (100) eingebaut ist, durch Berechnen der Anfangstemperatur der Wicklung (106, 106a, 106b) in einer Startsequenz, wenn die Probenfördervorrichtung (100) aktiviert wird, schätzt.

10. Probenfördervorrichtung (100) nach Anspruch 1, die ferner umfasst:
als die magnetische Schaltung (107, 107a, 107b) eine erste Wicklung, die um einen äußeren Umfang eines ersten Magnetpols gewickelt ist, und eine zweite Wicklung, die um einen äußeren Umfang eines zweiten Magnetpols gewickelt ist, wobei
die Ansteuereinheit (108) einen Prüfstrom durch die zweite Wicklung zu einer Zeit leitet, zu der der Strom durch die erste Wicklung fließt und der Strom nicht durch die zweite Wicklung fließt, um die Abnahme in der zweiten Wicklung zu detektieren, und
die Arithmetikeinheit (110) die Abnahme in der ersten Wicklung unter Verwendung der Abnahme in der zweiten Wicklung schätzt.

11. Probenanalysesystem (1000), das die Probenfördervorrichtung (100) nach Anspruch 1 enthält.

12. Probenvorbehandlungssystem, das die Probenfördervorrichtung (100) nach Anspruch 1 enthält.

## Revendications

1. Dispositif de convoyage d'échantillon (100) qui convoie un conteneur à échantillon (101) contenant un échantillon, le dispositif (100) comprenant :
un matériau magnétique (103) qui est disposé dans un trajet de convoyage sur lequel est convoyé le conteneur à échantillon (101) ;
un circuit magnétique (107, 107a, 107b) qui inclut des bobinages (106, 106a, 106b) enroulés autour d'une circonférence extérieure du matériau magnétique (103) ;
une unité de pilotage (108) qui alimente un courant au bobinage (106, 106a, 106b) ;
une unité de détection de courant (109) qui détecte une valeur de courant d'un courant s'écoulant à travers le circuit magnétique (107, 107a, 107b) ; et
une unité arithmétique (110) qui commande l'unité de pilotage (108), dans lequel
quand le courant s'écoule à travers le bobinage (106, 106a, 106b), le circuit magnétique (107, 107a, 107b) génère une force magnétique agissant sur le conteneur à échantillon (101) pour déplacer le conteneur à échantillon (101) sur le trajet de convoyage,
l'unité arithmétique (110) commande l'unité de pilotage (108) de manière à alimenter le courant ayant une valeur de courant de consigne fixée à l'avance pour amener le conteneur à échantillon (101) à effectuer une opération de déplacement prédéterminée sur le trajet de convoyage jusqu'au bobinage (106, 106a, 106b), le dispositif de convoyage d'échantillon (100) étant **caractérisé en ce que** :
l'unité arithmétique (110) calcule une diminution dans le courant à partir de la valeur de courant de consigne due à une augmentation dans une résistance de conducteur du bobinage (106, 106a, 106b) quand le courant s'écoule à travers le bobinage (106, 106a, 106b), et
l'unité arithmétique (110) amène le conteneur à échantillon (101) à effectuer l'opération de déplacement sur le trajet de convoyage en changeant la valeur actuelle du courant en fonction de la diminution calculée.

2. Dispositif de convoyage d'échantillon (100) selon la revendication 1, comprenant en outre :
une unité de stockage (111) qui stocke des données de valeur de courant décrivant une relation entre un changement dans le temps dans la valeur actuelle du courant s'écoulant à travers le bobinage (106, 106a, 106b) et un temps pour faire passer le courant à travers le bobinage (106, 106a, 106b), dans lequel
l'unité arithmétique (110) calcule la diminution par référence aux données de valeur de courant en utilisant le temps pour faire passer le courant à travers le bobinage (106, 106a, 106b).

3. Dispositif de convoyage d'échantillon (100) selon la revendication 1, comprenant en outre :
une unité de stockage (111) qui stocke des données de valeur de température et de courant décrivant une relation parmi un temps pour faire passer le courant à travers le bobinage (106, 106a, 106b), une augmentation dans une température du bobinage (106, 106a, 106b) due au courant s'écoulant à travers le bobinage (106, 106a, 106b), et une fluctuation dans la valeur actuelle du courant due à l'augmentation dans la température du bobinage (106, 106a, 106b), dans lequel
l'unité arithmétique (110) acquiert l'augmentation dans la température du bobinage (106, 106a, 106b) par référence aux données de température et de courant en utilisant le temps pour faire passer le courant à travers le bobinage (106, 106a, 106b), et
l'unité arithmétique (110) calcule la diminution par référence aux données de valeur de température et de courant en utilisant l'augmentation acquise dans la température du bobinage (106, 106a, 106b).

4. Dispositif de convoyage d'échantillon (100) selon la revendication 1, comprenant en outre :
une unité de stockage (111) qui stocke des données de force magnétique décrivant une relation entre une force magnétique générée par le courant s'écoulant à travers le bobinage (106, 106a, 106b) et la valeur actuelle du courant, dans lequel
l'unité arithmétique (110) calcule une force magnétique réduite agissant sur le conteneur à échantillon (101) sous une valeur de courant réduite par référence aux données de force magnétique en utilisant la valeur de courant réduite qui est réduite via la diminution par rapport à la valeur de courant de consigne, et
quand le conteneur à échantillon (101) ne peut pas être déplacé à raison d'une distance de consigne due à la force magnétique réduite, l'unité arithmétique (110) change la valeur actuelle du courant en utilisant la diminution.

5. Dispositif de convoyage d'échantillon (100) selon la revendication 1, comprenant en outre :
une unité de stockage (111) qui stocke des données de température décrivant une relation entre une augmentation dans une température du bobinage (106, 106a, 106b) due au courant s'écoulant à travers le bobinage (106, 106a, 106b) et le temps pour faire passer le courant à travers le bobinage (106, 106a, 106b), dans lequel
l'unité arithmétique (110) calcule l'augmentation dans la température du bobinage (106, 106a, 106b) par référence aux données de température en utilisant le temps pour faire passer le courant à travers le bobinage (106, 106a, 106b).

6. Dispositif de convoyage d'échantillon (100) selon la revendication 1, comprenant en outre :
une unité de stockage (111) qui stocke des données de valeur de température et de courant décrivant la relation parmi un temps pour faire passer le courant à travers le bobinage (106, 106a, 106b), une augmentation dans une température du bobinage (106, 106a, 106b) due au courant s'écoulant à travers le bobinage (106, 106a, 106b), et une fluctuation dans la valeur actuelle du courant due à l'augmentation dans la température du bobinage (106, 106a, 106b), dans lequel
l'unité arithmétique (110) acquiert la fluctuation dans la valeur actuelle du courant en utilisant le temps pour faire passer le courant à travers le bobinage (106, 106a, 106b), et
l'unité arithmétique (110) calcule l'augmentation dans la température du bobinage (106, 106a, 106b) par référence aux données de valeur de température et de courant en utilisant la fluctuation acquise de la valeur de courant.

7. Dispositif de convoyage d'échantillon (100) selon la revendication 1, comprenant en outre :
une unité de stockage (111) qui stocke des données de valeur de température et de courant décrivant la relation parmi un temps pour faire passer le courant à travers le bobinage (106, 106a, 106b), une augmentation dans une température depuis une température initiale du bobinage (106, 106a, 106b) due au courant s'écoulant à travers le bobinage (106, 106a, 106b), et une fluctuation dans la valeur actuelle du courant due à l'augmentation dans la température du bobinage (106, 106a, 106b), dans lequel
l'unité de stockage (111) stocke les données de valeur de température et de courant pour chaque température initiale du bobinage (106, 106a, 106b), et l'unité arithmétique (110) calcule la température initiale du bobinage (106, 106a, 106b) par référence aux données de valeur de température et de courant en utilisant le temps pour faire passer le courant à travers le bobinage (106, 106a, 106b) ou la valeur de courant détectée par l'unité de détection de courant (109).

8. Dispositif de convoyage d'échantillon (100) selon la revendication 7, comprenant en outre :
à titre de bobinage (106, 106a, 106b), un premier bobinage enroulé autour d'une circonférence extérieure d'un premier pôle magnétique et un deuxième bobinage enroulé autour d'une circonférence extérieure d'un deuxième pôle magnétique, dans lequel
l'unité de stockage (111) stocke les données de valeur de température et de courant pour chaque valeur initiale de la valeur de courant,
l'unité de pilotage (108) fait passer le courant ayant une première valeur de courant initiale à travers le premier bobinage et fait passer le courant ayant une deuxième valeur de courant initiale à travers le deuxième bobinage,
l'unité arithmétique (110) acquiert une première température initiale du bobinage (106, 106a, 106b) par référence aux données de valeur de température et de courant en utilisant la première valeur de courant initiale, l'unité arithmétique (110) acquiert une deuxième température initiale du bobinage (106, 106a, 106b) par référence aux données de valeur de température et de courant en utilisant la deuxième valeur de courant initiale, et
quand une différence entre la première température initiale et la deuxième température initiale est inférieure à une valeur seuil, l'unité arithmétique (110) spécifie la première température initiale, la deuxième température initiale, ou une température intermédiaire entre la première température initiale et la deuxième température initiale à titre de température initiale du bobinage (106, 106a, 106b).

9. Dispositif de convoyage d'échantillon (100) selon la revendication 7, dans lequel l'unité arithmétique (110) estime une température d'un environnement dans lequel est installé le dispositif de convoyage d'échantillon (100) en calculant la température initiale du bobinage (106, 106a, 106b) dans une séquence de démarrage quand le dispositif de convoyage d'échantillon (100) est activé.

10. Dispositif de convoyage d'échantillon (100) selon la revendication 1, comprenant en outre :
à titre de circuit magnétique (107, 107a, 10b7), un premier bobinage enroulé autour d'une circonférence extérieure d'un premier pôle magnétique et un deuxième bobinage enroulé autour d'une circonférence extérieure d'un deuxième pôle magnétique, dans lequel
l'unité de pilotage (108) fait passer un courant d'essai destiné à détecter la diminution dans le deuxième bobinage à travers le deuxième bobinage à un moment où le courant s'écoule à travers le premier bobinage et où le courant ne s'écoule pas travers le deuxième bobinage, et
l'unité arithmétique (110) estime la diminution dans le premier bobinage en utilisant la diminution dans le deuxième bobinage.

11. Système d'analyse d'échantillon (1000) incluant le dispositif de convoyage d'échantillon (100) selon la revendication 1.

12. Système de prétraitement d'échantillon incluant le dispositif de convoyage d'échantillon (100) selon la revendication 1.
